# EUROPÄISCHE PATENTSCHRIFT

(11) **EP 4 012 861 B1**
(45) Veröffentlichungstag und Bekanntmachung des Hinweises auf die Patenterteilung: **01.10.2025**
(21) Anmeldenummer: 20213538.0
(22) Anmeldetag: 11.12.2020
(51) Int. Cl.: H02G 3/00, F16B 5/02, F16B 7/18, F16L 3/26, F16B 21/09

(54) **MONTAGEVORRICHTUNG MIT EINEM AUSLEGER**
MOUNTING DEVICE WITH BOOM
DISPOSITIF DE MONTAGE DOTÉ D'UN BRAS

(43) Veröffentlichungstag der Anmeldung: 15.06.2022
(73) Patentinhaber: Zurecon AG, 9053 Teufen AR (CH)
(72) Erfinder: PFLUGER, Gerd, 4625 Oberbuchsiten (CH)
(74) Vertreter: Rutz & Partner

(56) Entgegenhaltungen:
- EP-A1- 0 575 269
- EP-A1- 2 290 772
- EP-A1- 2 846 428
- EP-A1- 3 664 236

## Beschreibung

Die Erfindung betrifft eine Montagevorrichtung mit einem Ausleger.

Gattungsgemässe Montagevorrichtungen werden in der Installationstechnik verwendet und dienen dem Tragen von Lasten, wie Kabelkanälen, Kabelpritschen und Kabelleitern sowie damit gehaltenen Medienleitungen, wie elektrischen Leitungen, Wasserrohren, und dergleichen. Die Montagevorrichtungen umfassen ein Tragprofil, z.B. eine Deckenstütze, an der einseitig oder auf einander gegenüberliegenden Seiten wenigstens ein Ausleger montiert wird. Traditionell werden Ausleger mit dem Tragprofil verschraubt.

[1], EP1155638A1, offenbart einen Ausleger, der lösbar an einer Deckenstütze montierbar ist, die dazu mit Montageöffnungen versehen ist. Der Ausleger besteht aus einem der Aufnahme der Last dienenden Tragarm und einem damit verbundenen Kopfstück, das ebenfalls eine Montageöffnung aufweist. Die Montage des Auslegers erfolgt anhand von hakenförmigen Verbindungselementen, die in die Montageöffnungen eingeführt werden. Der Ausleger kann daher an der Deckenstütze in wählbarer Höhe sowie, je nach Art der Deckenstütze **(z.B.** Vierkant-Hohlprofil oder sogenanntes C-Profil), in eine wählbare Richtung weisend, montiert werden. Nachteilig bei diesem Ausleger ist, dass dessen Herstellung einen erheblichen Aufwand verursacht. Der Tragarm wird nämlich an das zugehörige Montageteil angeschweisst, was nicht nur mit einem hohen Aufwand verbunden ist, sondern auch weitere Nachteile nach sich zieht.

Einerseits ist zu beachten, dass die Ausleger oft hohe Lasten tragen und daher starken mechanischen Belastungen ausgesetzt sind. Mangelhafte Schweissstellen können aufreissen, wonach die Last nicht mehr sicher gehalten ist.

Obwohl anhand der Verbindungselemente eine formschlüssige Verbindung zwischen dem Ausleger und der Deckenstütze ohne die Verwendung von Schrauben erstellt werden kann, verursacht die Handhabung der hakenförmigen Verbindungselemente bei der Montage, insbesondere auf einer Leiter nahe der Decke stehend, doch beachtliche Schwierigkeiten. Insbesondere bei tiefen Temperaturen fällt es dem Monteur oft nicht leicht, die relativ kleinen Verbindungselemente in die ausgewählte Öffnung in der Deckenstütze und in die Öffnung im Kopfstück des Auslegers einzuführen. Sofern der Monteur Schutzhandschuhe trägt, ist der Montagevorgang weiter erschwert.

[2], EP1804354A2, offenbart ein Tragprofil, welches in regelmässigen Abständen Langlöcher aufweist, und einen Ausleger, der durch einen Adapter mit dem Tragprofil verbindbar ist. Der Ausleger weist stirnseitig an der dem Tragprofil zugewandten Seite eine Stirnplatte mit einer Öffnung auf. Der Adapter umfasst eine Platte, die auf einer Seite mit wenigstens einem ersten Haken in eine Längsöffnung des Tragprofils einhängbar ist und die auf der anderen Seite einen zweiten Haken aufweist, der in die Öffnung der Stirnplatte des Auslegers eingehängt werden kann. Nach der Installation des Auslegers und dem Auflegen einer Kabelrinne sind der mit dem Ausleger verbundene zweite Haken des Adapters und die Stirnplatte des Auslegers hohen Zugkräften ausgesetzt, weshalb eine beschränkte Belastbarkeit resultiert. Der auf Zug belastete zweite Haken, der aus dem Adapter ausgeschnitten und ausgeformt ist, kann sich weiter verformen, wonach der Ausleger unter erhöhter Last abkippt. Zu beachten ist, dass bei der Installation von Kabelbahnen und Kabelrinnen oft sehr hohe Lasten auf die Ausleger einwirken. Dies z.B., wenn sich der Monteur auf die installierte Kabelbahn oder Kabelrinne abstützt. In solchen Fällen besteht selbst für den Monteur ein Sicherheitsrisiko, falls sich der Ausleger lösen sollte.

Zu beachten ist, dass auch bei dieser Lösung die Montage des Auslegers mit Schwierigkeiten verbunden ist, falls der Monteur Handschuhe trägt.

Nachteilig bei dieser Lösung ist ferner, dass sich der Ausleger leicht wieder lösen kann, wenn der Monteur an diesen anstösst. Beispielsweise bei einem Stoss von unten kann der Ausleger leicht vom Haken gelöst werden. Eine stabile und sichere Verbindung resultiert erst nachdem eine Last auf den Ausleger aufgelegt wurde.

Nachteilig bei bekannten Kabelführungsvorrichtungen ist weiterhin, dass mechanische Kräfte ungedämpft über grössere Distanzen übertragen werden, sodass sich Geräusche ausbreiten und starke Kräfte auch auf entfernt liegende Vorrichtungsteile einwirken können, was möglicherweise das selbsttätige Lösen von Vorrichtungsteilen zur Folge haben kann.

Die [3], EP 2846428A1, offenbart eine Montagevorrichtung mit einem Winkelelement, mittels dessen unterschiedlich zueinander ausgerichtete und von Auslegern gehaltene Kabelbahnelemente einer Kabelbahn miteinander verbindbar sind. Das Winkelelement weist eines oder mehrere Segmente auf, die derart zugeschnitten sind, dass die in einem entsprechenden Winkel zueinander ausgerichteten Kabelbahnelemente miteinander verbunden werden können. Da Segmente nicht in beliebiger Form zur Verfügung stehen, sind nur bestimmte gegenseitige Ausrichtungen der Kabelbahnelemente realisierbar. Weiterhin ist das einteilige Winkelelement relativ voluminös und nur mit einem entsprechenden Aufwand herstellbar und montierbar.

Die EP3664236A1 offenbart eine Montagevorrichtung mit wenigstens einem Tragprofil, das ein Seitenteil aufweist, das mit einer Reihe von regelmässig voneinander beanstandeten Profilöffnungen versehen ist, und einen mit dem Tragprofil verbundenen Ausleger. Der Ausleger umfasst ein Kopfstück, das ein langgestrecktes Verbindungsteil aufweist und das mit einem der Seitenteile des Tragprofils verbunden ist, und einen mit dem Kopfstück verbundenen Tragarm, welcher eine Auflageplatte umfasst, an die an beiden Seiten eine abgewinkelte Seitenplatte anschliesst.

Die EP0575269A1 offenbart eine Vorrichtung zum Aufhängen von Kabelkanälen mit einem Tragprofil, das ein Seitenteil aufweist, das mit einer Reihe von regelmässig voneinander beanstandeten Profilöffnungen versehen ist, und mit dem Tragprofil verbundene Ausleger. Die Ausleger umfassen je ein Kopfstück, das mit dem Seitenteil des Tragprofils verschraubt ist.

Die EP2846428A1 offenbart ein Winkelelement für Kabelträger und einen Kabelträger mit diesem Winkelelement.

Der vorliegenden Erfindung liegt daher die Aufgabe zugrunde, eine verbesserte Montagevorrichtung mit einem Tragprofil und einem Ausleger zu schaffen.

Mittels der Montagevorrichtung sollen beliebige Kabelführungsvorrichtungen, wie Kabelbahnen, Kabelpritschen oder Gitterbahnen, vorteilhaft installierbar sein.

Der Ausleger sowie die Montagevorrichtung mit dem Tragprofil und dem Ausleger sollen einfach ausgestaltet sein und mit geringem Arbeitsaufwand in hoher Qualität hergestellt werden können.

Die Montagevorrichtung soll vorzugsweise die Installation von Kabelführungsvorrichtungen erlauben, die parallel zueinander ausgerichtet sind oder einen beliebigen Winkel zueinander einschliessen. Auf aufwändige Winkelelemente soll dabei verzichtet werden können. Mittels der Montagevorrichtung, die eines oder mehrere Tragprofile umfasst, sollen Kabelführungsvorrichtungen, die einen beliebigen Verlauf mit mehreren Richtungswechseln aufweisen können, besonders einfach montierbar sein.

Ausleger sollen besonders einfach ausgestaltet und mit nur einem Handgriff, gegebenenfalls nur mit einer Hand, montierbar sein. Insbesondere soll der Ausleger auch von Monteuren, die Schutzhandschuhe tragen, einfach und sicher installiert werden können.

Mit der Montage des Auslegers soll sofort eine stabile und sichere Verbindung zwischen dem Ausleger und dem Tragprofil resultieren. Ein zufälliges Lösen des Auslegers bei einer unachtsamen Bewegung gegen den Ausleger soll praktisch ausgeschlossen sein.

Bei Kabelführungsvorrichtungen, die erfindungsgemässe Montagevorrichtungen umfassen, sollen einwirkende Kräfte vorzugsweise nicht über grössere Distanzen übertragen werden und die Übertragung von Geräuschen vermieden werden können.

Diese Aufgabe wird mit einer Montagevorrichtung mit einem Tragprofil gelöst, welche die in Anspruch 1 angegebenen Merkmale aufweist. Vorteilhafte Ausgestaltungen der Erfindung sind in weiteren Ansprüchen angegeben.

Die Montagevorrichtung umfasst ein Tragprofil, vorzugsweise eine Deckenstütze, das wenigstens ein Seitenteil aufweist, das mit einer Reihe von vorzugsweise regelmässig voneinander beanstandeten Profilöffnungen versehen ist, und einen mit dem Tragprofil verbundenen Ausleger, der ein Kopfstück, das mit einem der Seitenteile verbunden ist, und einen mit dem Kopfstück verbundenen Tragarm aufweist, welcher eine Auflageplatte umfasst, an die an einer oder beiden Seiten eine abgewinkelte Seitenplatte anschliesst.

Erfindungsgemäss weist das Kopfstück ein langgestrecktes Verbindungsteil auf, an das ein hakenförmiges Halteteil anschliesst, wobei das langgestreckte Verbindungsteil eingeführt durch eine erste Profilöffnung innerhalb des Tragprofils bis zu einer zweiten Profilöffnung verläuft, an der das Halteteil aus dem Tragprofil heraus ragt und am Tragprofil eingehängt ist und dass ein Endstück der wenigstens einen Seitenplatte angrenzend an die erste Profilöffnung am zugehörigen Seitenteil des Tragprofils anliegt.

Das Tragprofil und der Ausleger können mit einfachen Werkzeugen kostengünstig und in hoher Qualität, gegebenenfalls einstückig aus einer Metallplatte oder einem Metallblech gefertigt werden. Vorteilhaft können Ausgangsmaterialien verwendet werden, die mit einer Schutzschicht versehen sind, die bei der Bearbeitung nicht oder nicht wesentlich beschädigt wird. Beispielsweise werden Sendzimir verzinkte Metallstücke zur Herstellung der Ausleger verwendet.

Das Tragprofil und der Ausleger können vorteilhaft einstückig gefertigt werden, sodass ein geringer Fertigungsaufwand und eine hohe Festigkeit des Tragprofils und des Auslegers sowie der zusammengesetzten Montagevorrichtung resultieren.

Der Ausleger kann besonders einfach montiert werden, indem das Verbindungsteil angeführt vom Halteteil in die erste Profilöffnung eingeführt und bis zur zweiten Profilöffnung geführt und dort eingehängt wird. Bei diesem Vorgang erfolgt praktisch automatisch eine Drehung des Auslegers, der aus einer geneigten Lage bis zu einer Ausrichtung parallel zum Tragprofil gedreht wird. Nach dieser Drehung liegt das Endstück der wenigstens einen Seitenplatte am zugehörigen Seitenteil des Tragprofils an und verhindert eine weitere Drehung des horizontal ausgerichteten Auslegers auch wenn dieser belastet wird.

Das Endstück der wenigstens einen Seitenplatte oder die Endstücke der beiden Seitenplatten des Auslegers sind vorzugsweise am zugehörigen Seitenteil des Tragprofils in Einformungen einsenkbar. Die Einformungen sind vorzugsweise als Nuten oder Rinnen ausgebildet, die vorzugsweise als Führungsschiene dienen. Die montierten Ausleger werden daher automatisch in der gewünschten Ausrichtung gehalten und können sich unter Last gegebenenfalls entlang den Einformungen bzw. Führungsschienen verschieben, falls das Kopfstück, das Verbindungsteil oder das Halteteil elastisch ausgebildet sind oder falls ein elastisches Teil vorgesehen ist.

Der Ausleger kann daher mit einer Hand am Tragarm erfasst und durch die beschriebene Bewegung in einfacher Weise mit dem Tragprofil verbunden werden. Der Montagevorgang kann mit einer Hand, die gegebenenfalls durch einen Handschuh gegen Kälte und Verletzungen geschützt ist, montiert werden. Der Monteur, der in exponierter Lage z.B. auf einer Leiter steht, hat somit eine Hand frei, mit der er sich absichern kann, während er mit der zweiten Hand den Ausleger mit einem Handgriff montiert.

Besonders vorteilhaft ist, dass sich erfindungsgemässe Ausleger nach der einfachen Montage auch bei zufälligen Krafteinwirkungen nicht mehr vom Tragprofil lösen. Nach der eigenhändigen Montage der Ausleger können diese daher nur durch eine bestimmte Auslösebewegung vom Tragprofil wieder getrennt werden, sodass ein zufälliges oder selbsttätiges Lösen ausgeschlossen ist. Trotz und auch wegen der einfachen Ausgestaltung der Montagevorrichtung resultiert eine erhöhte Betriebssicherheit.

Die erste und zweite Profilöffnung können unmittelbar aufeinanderfolgen oder durch eine wenigstens eine dritte Profilöffnung voneinander getrennt sein. Ferner können die erste und zweite Profilöffnung am selben Seitenteil des Tragprofils oder auf gegenüberliegenden Seiten des Tragprofils vorgesehen sein. Die erste Profilöffnung liegt oberhalb oder unterhalb der zweiten Profilöffnung. Ausgehend von der vorliegenden Erfindung sind daher Ausleger vorteilhaft realisierbar, die auf unterschiedliche Weise in das Tragprofil eingehängt werden, wobei das Verbindungsteil stets innerhalb des Tragprofils oder auf der Rückseite des Seitenteils des Tragprofils verläuft, an dem der Ausleger befestigt ist.

In vorzugsweisen Ausgestaltungen sind das Verbindungsteil und/oder das Halteteil federelastisch ausgebildet. Alternativ oder zusätzlich kann das Halteteil mit einem federelastischen Teil, einer Metallfeder oder einem gegebenenfalls durch Metallelemente geschützten Kunststoffelement, versehen sein, welches auf ein entsprechendes Teil des Tragprofils abgestützt wird. Dadurch erhält die Montagevorrichtung in einfacher Weise eine Elastizität, die es erlaubt einwirkende Kräfte und insbesondere Schwingungen und Geräusche zu dämpfen und an der weiteren Ausbreitung zu hindern.

Das Halteteil weist vorzugsweise ein zumindest annähernd parallel zum Verbindungsteil verlaufendes Abschlussteil auf, welches mit dem freien Ende gegen den Tragarm des Auslegers gerichtet ist. Das Abschlussteil ist vorzugsweise zungenförmig ausgebildet und endseitig nach aussen gebogen, so dass es in einfacher Weise in die zweite Profilöffnung eintreten kann.

Vorzugsweise ist das Abschlussteil gebogen und/oder federelastisch ausgebildet, sodass es das erfasste Seitenteil spielfrei halten kann. Durch einen leichten Schlag auf das Tragprofil kann der Ausleger dadurch in die Endpositionen geführt oder auch wieder gelöst werden.

In vorzugsweisen Ausgestaltungen ist das vorzugsweise federelastische Abschlussteil des Halteteils als Rastelement ausgebildet, sodass es in eine Ausnehmung oder Profilöffnung im Tragprofil eingreifen kann. Mit dem Einhängen des Auslegers erfolgt somit automatisch eine Rastverbindung, welche den Ausleger sichert. Diese Rastverbindung kann z.B. mittels eines Schraubendrehers, mit dem das Abschlussteil zurückgebogen wird, leicht wieder gelöst werden.

Vorzugsweise weisen das Verbindungsteil und/oder das Halteteil wenigstens eine Durchtrittsöffnung zur Durchführung einer Arretierschraube oder Montageschraube auf. In vorzugsweisen Ausgestaltungen sind eine Durchtrittsöffnung des Verbindungsteils und eine Durchtrittsöffnung des Halteteils koaxial zueinander angeordnet, sodass eine Arretierschraube oder eine Montageschraube durch beide Durchtrittsöffnungen hindurch geführt werden kann. Von den Durchtrittsöffnungen ist vorzugsweise wenigstens eine als Gewindebohrung ausgestaltet, in die eine Arretierschraube oder eine Montageschraube eindrehbar ist. Mittels der Arretierschraube, die z.B. in eine zwischen der ersten und zweiten Profilöffnung vorgesehene dritte Profilöffnung eingedreht wird, kann der Ausleger am Tragprofil arretiert werden. Mittels einer Montageschraube kann ein Ausleger alternativ auch an einer Wand befestigt werden.

Weiter wird eine Montagevorrichtung mit einem Ausleger offenbart, der wie beschrieben oder auf andere Weise mit einem Tragprofil verbindbar ist und der ein Kopfstück und einen vorzugsweise einstückig mit dem Kopfstück verbundenen Tragarm aufweist, welcher eine Auflageplatte umfasst, an die an einer oder beiden Seiten eine abgewinkelte Seitenplatte anschliesst. Die Auflageplatte des Tragarms ist breiter als das Tragprofil ausgebildet, so dass auf der Auflageplatte gegeneinander gerichtete Enden von zwei Kabelführungsvorrichtungen aufgelegt und vorzugsweise fixiert werden können. Zum Halten der Kabelführungsvorrichtung sind beispielsweise Montageelemente oder Flügelelemente vorgesehen. Auf der Auflageplatte können Kabelführungsvorrichtungen, wie Kabelbahnen, Kabelpritsche oder Gitterbahnen, parallel zueinander ausgerichtet oder wahlweise gegeneinander abgewinkelt werden, sodass sie einen Winkel im Bereich von z.B. 90° bis 270° einschliessen. Anstelle eines Winkelstücks wird daher ein entsprechend ausgebildeter Ausleger vorgesehen. Ausleger mit einer verbreiterten Auflageplatte werden bei der Montagevorrichtung, die mehrere voneinander beanstandete und z.B. an der Decke montierte Tragprofile umfasst, vorzugsweise an den Stellen montiert, an denen die Enden von zwei Kabelführungsvorrichtungen zu halten sind, die gegebenenfalls gegeneinander geneigt sind. Auf aufwändige Winkelstücke und deren Montage kann daher verzichtet werden.

### BESCHREIBUNG

An einem Tragprofil können an jedem Seitenteil ein Ausleger oder mehrere Ausleger auf ausgewählter Höhe befestigt werden.

Die Profilöffnungen im Tragprofil sind identisch oder unterschiedlich, z.B. abgerundet oder polygonal, ausgebildet und in einem regelmässigen oder unregelmässigen Abstand angeordnet. Dabei sind jeweils wenigstens zwei der Profilöffnungen bzw. eine erste Profilöffnung und eine zweite Profilöffnung und die Länge des Verbindungsteils einander entsprechend gewählt. Sofern der Abstand der Profilöffnung regelmässig gewählt ist, so können die Ausleger in gleichen Schritten verschoben und montiert werden. Nachfolgend wird die Erfindung anhand von Zeichnungen näher erläutert. Dabei zeigt:
- Fig. 1a: zeigt eine erfindungsgemässen Montagevorrichtung 3 mit einem Tragprofil 2, welches drei mit Profilöffnungen 21, 22 versehene Seitenteile 2A, 2B, 2C aufweist, und mit einem Ausleger 1, der einen Tragarm 11 mit einer Auflageplatte 111, an die beidseits je eine abgewinkelte Seitenplatte 112 anschliesst, und ein Kopfstück 12 umfasst, das mit dem Tragprofil 2 verbindbar ist und das ein langgestrecktes Verbindungsteil 121 aufweist, an das ein hakenförmiges Halteteil 13 anschliesst;
- Fig. 1b: den Ausleger 1 von Fig. 1a montiert an einer Wand (nicht erfindungsgemäß);
- Fig. 2a: die Montagevorrichtung 3 mit dem Tragprofil 2 und dem Ausleger 1 von Fig. 1a bei der Einführung des Halteteils 13 und des Verbindungsteils 121 in eine erste Profilöffnung 21A am Seitenteil 2B des Tragprofils 2;
- Fig. 2b: die Montagevorrichtung 3 von Fig. 2a nach der vollständigen Durchführung des Verbindungsteils 121 durch die erste Profilöffnung 21A;
- Fig. 2c: die Montagevorrichtung 3 von Fig. 2b nach dem Drehen des Auslegers 1 und dem Eindrehen des Halteteils 13 in eine zweite Profilöffnung 21B;
- Fig. 2d: die Montagevorrichtung 3 von Fig. 2c nach dem vertikalen Verschieben des Auslegers 1 und dem Einhängen des Halteteils 13 am Seitenteil 2B;
- Fig. 3a: die Montagevorrichtung 3 in der Position des Auslegers 1 von Fig. 2c mit einer Arretierschraube 8, die in Durchtrittsöffnungen 120 (siehe Fig. 1a) und 130 im Verbindungsteil 121 und im Halteteil 13 eindrehbar ist;
- Fig. 3b: die Montagevorrichtung 3 von Fig. 3a nach dem vertikalen Verschieben des Auslegers 1 und dem Einhängen des Halteteils 13 am Seitenteil 2B sowie der Arretierung des Auslegers 1 durch Eindrehen der Arretierschraube 8;
- Fig. 3c: das Halteteil 13 des Auslegers 1 mit einem Abschlussteil 131, welches ein Rastelement 1311 aufweist, das in die benachbarte Profilöffnung 22 einrasten kann;
- Fig. 4a: die Montagevorrichtung 3 von Fig. 3a mit einem vorzugsweise ausgestalteten Ausleger 1, dessen Tragarm 11 eine breitere Auflageplatte 111, Stabilisierungselemente 1121, 1121S und Halteelemente 1111 aufweist;
- Fig. 4b: der Ausleger 1 von Fig. 4a mit einer gelochten Auflageplatte 111, nicht durch Ansprüche abgedeckt;
- Fig. 5: eine Montagevorrichtung 3 mit dem Ausleger 1 von Fig. 4b und 2 darauf aufgelegten Kabelbahnen 4A und 4B;
- Fig. 6a: die Montagevorrichtung 3 von Fig. 5 mit auslenkbaren Flügelprofilen 5A, 5B, nicht durch Ansprüche abgedeckt; und
- Fig. 6b: die Montagevorrichtung 3 von Fig. 6a mit ausgelenkten Flügelprofilen 5A, 5B, nicht durch Ansprüche abgedeckt.

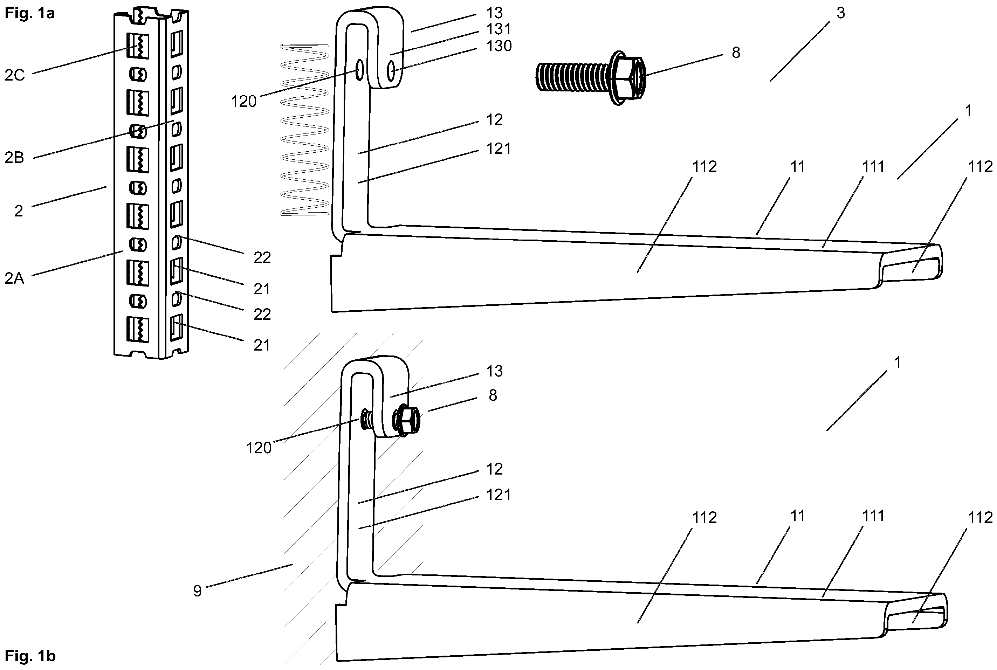

Fig. 1a zeigt eine erfindungsgemässe Montagevorrichtung 3 mit einem Tragprofil 2, z.B. einer an einer Decke montierbaren Deckenstütze, und mit einem Ausleger 1, der am Tragprofil 2 montierbar ist.

Das vorzugsweise aus einem Metallstück gefertigte Tragprofil 2 ist ein mehrfach gefaltetes Metallblech, welches drei Seitenteile 2A, 2B, 2C aufweist, die je mit in regelmässigen Abständen angeordneten Profilöffnungen 21, 22 versehen sind. Auf der vierten Seite sind die Endstücke des Tragprofils 2 klauenförmig gegeneinander nach innen gedreht und je mit einer Zahnreihe versehen. Das Tragprofil 2 ist exemplarisch gezeigt und kann beliebige Seitenteile und gleiche oder unterschiedliche, gerundete oder polygonale Profilöffnungen aufweisen. Für die vorliegende Erfindung ist wesentlich, dass wenigstens ein Seitenteil 2A, 2B oder 2C mit Profilöffnungen vorgesehen ist, die zum Einhängen der Ausleger 1 geeignet sind. Der vorzugsweise aus einem Metallstück einstückig gefertigte Ausleger 1 umfasst einen Tragarm 11 und ein Kopfstück 12. Der Tragarm 11 weist eine Auflageplatte 111 auf, an die beidseits je eine abgewinkelte Seitenplatte 112 anschliesst. Das Kopfstück 12, das mit dem Tragprofil 2 verbindbar ist, umfasst ein langgestrecktes Verbindungsteil 121, an das ein hakenförmiges Halteteil 13 anschliesst. Die Länge des Verbindungsteils 121 ist entsprechend dem Abstand der Profilöffnungen 21, 22 des Tragprofils gewählt. Sofern für den Tragarm 11 und das Kopfstück 12 unterschiedliche Materialien verwendet werden, so können diese auch miteinander verbunden werden. Beispielsweise wird das Kopfstück 12 aus einem federelastischen Metall gefertigt.

In Fig. 1a ist ein elastisches Element bzw. eine Feder gezeigt, die symbolisiert, dass das Verbindungsteil 121 vorzugsweise elastisch ausgebildet ist oder das Halteteil 13 mit einem elastischen Element, **z.B.** einem Kunststoffpuffer versehen ist. Das Verbindungsteil 121 kann dazu aus Federstahl gefertigt und/oder mit einer Wellenform versehen sein.

In dieser vorzugsweisen Ausgestaltung weist das Halteelement 13 ein parallel zum Verbindungsteil 121 ausgerichtetes und mit dem freien Ende zum Tragarm 11 weisendes Abschlussteil 131 auf. Das Abschlussteil 131 ist mit einer Durchtrittsöffnung 130 versehen, die koaxial zu einer Durchtrittsöffnung 120 im Verbindungsteil 121 angeordnet ist. Vorzugsweise ist wenigstens eine der Durchtrittsöffnungen 120, 130 mit einem Schraubengewinde versehen, in das die gezeigte Arretierschraube oder Montageschraube 8 eindrehbar ist. Mittels der Schraube in der Ausgestaltung einer Arretierschraube 8 kann der am Tragprofil 2 montierte Ausleger 1 arretiert werden. Mit der Schraube 8 in der Ausgestaltung einer Montageschraube kann der Ausleger 1 alternativ auch an einer Wand 9 montiert werden.

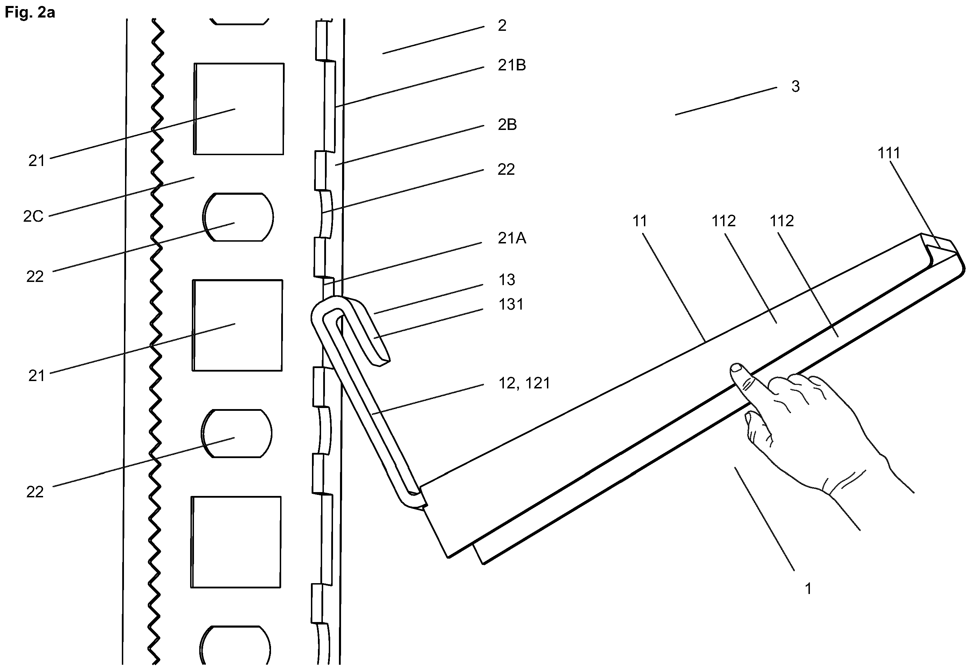

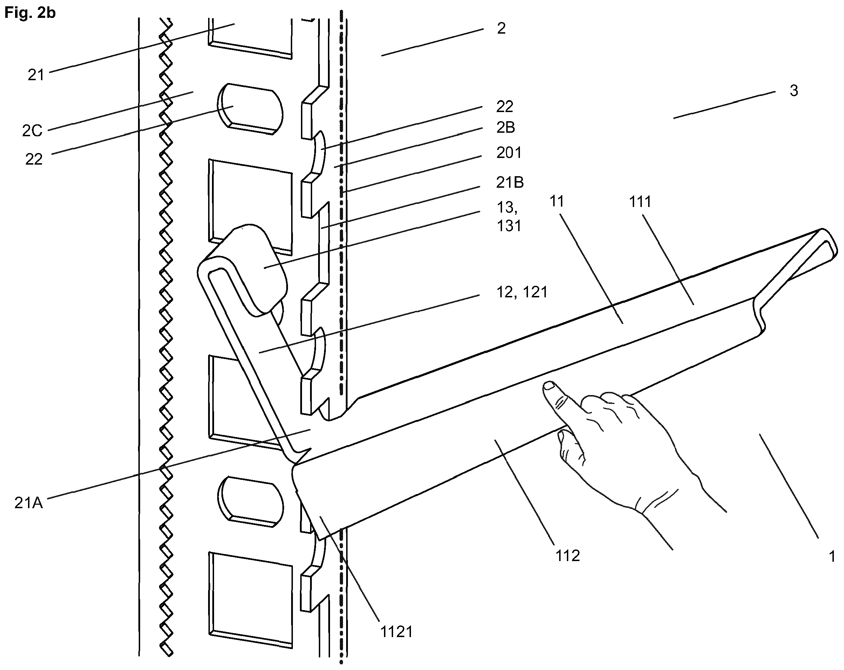

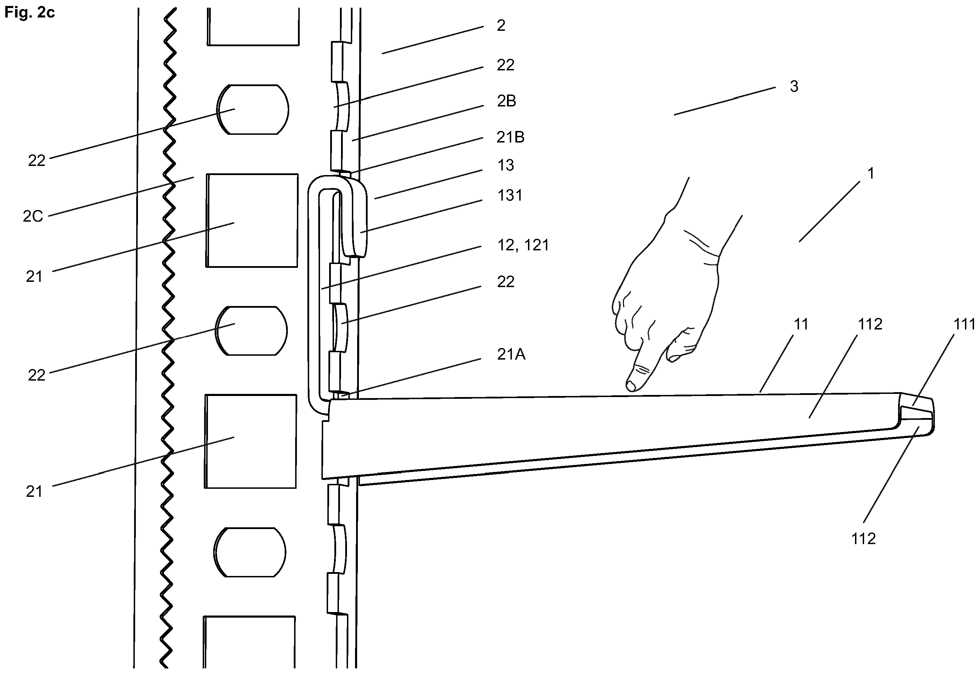

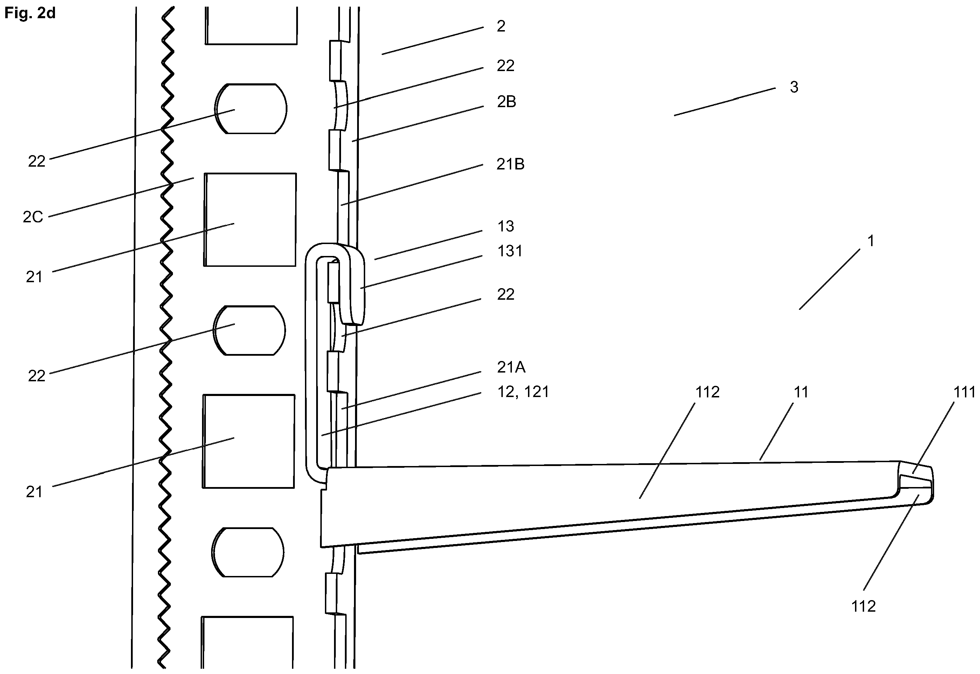

Die Figuren 2a, 2b, 2c und 2d zeigen den einfachen Vorgang der Montage des Auslegers 1 am Tragprofil 2. Dieser Vorgang kann mit nur einer Hand, die gegebenenfalls auch durch einen Handschuh geschützt ist, rasch und sicher ausgeführt werden. Das Tragprofil ist entlang der Längsachse geschnitten, so dass der Montagevorgang gut sichtbar ist.

Fig. 2a zeigt die Montagevorrichtung 3 mit dem Tragprofil 2 und dem Ausleger 1 von Fig. 1a bei der Einführung des Halteteils 13 und des Verbindungsteils 121 in eine erste Profilöffnung 21A am Seitenteil 2B des Tragprofils 2. Der Ausleger 1 wird dazu leicht im Gegenuhrzeigersinn gedreht, sodass das Halteteil 13 in die erste Profilöffnung 21A eingeführt werden kann.

Fig. 2b zeigt die Montagevorrichtung 3 von Fig. 2a nach der vollständigen Durchführung des Verbindungsteils 121 durch die erste Profilöffnung 21A. Der Ausleger 1 wird nun im Uhrzeigersinn gedreht, damit das Abschlussteil 131 des Halteteils 13 durch die zweite Profilöffnung 21B hindurch geführt werden kann.

In Fig. 2b sind durch strichpunktierten Linien vorzugsweise vorgesehene Einformungen 201 im Seitenteil 2B symbolisch gezeigt. Die Einformungen 201 sind zur Aufnahme der Endstücke 1121 der Seitenplatten 112 vorgesehen. Nach dem Eindrehen der Endstücke 1121 in die Einformungen 201 ist der Ausleger 1 seitlich nicht verschiebbar gehalten. Der Ausleger 1 kann nur noch entlang den Einformungen 201, welche Führungsschienen bilden, vertikal nach unten und nach oben verschoben werden. Die Einformungen sind z.B. Längsnuten oder stufenförmig verlaufende Kanten.

Fig. 2c zeigt die Montagevorrichtung 3 von Fig. 2b nach dem Drehen des Auslegers 1 und dem Eindrehen des Halteteils 13 mit dem freiliegenden Abschlussteil 131 in eine die Profilöffnung 21B. In dieser Position ist der Tragarm 11 zumindest annähernd horizontal ausgerichtet. Das dazu vorzugsweise um 90° geneigte Verbindungsteil 121 verläuft hingegen zumindest annähernd parallel zur Längsachse des Tragprofils 2. zum Abschluss des Montagevorgangs wird der Ausleger 1 nun nur noch vertikal nach unten verschoben.

Fig. 2d zeigt die Montagevorrichtung 3 von Fig. 2c nach dem vertikalen Verschieben des Auslegers 1 nach unten und dem dadurch erfolgten Einhängen des Halteteils 13 am Seitenteil 2B.

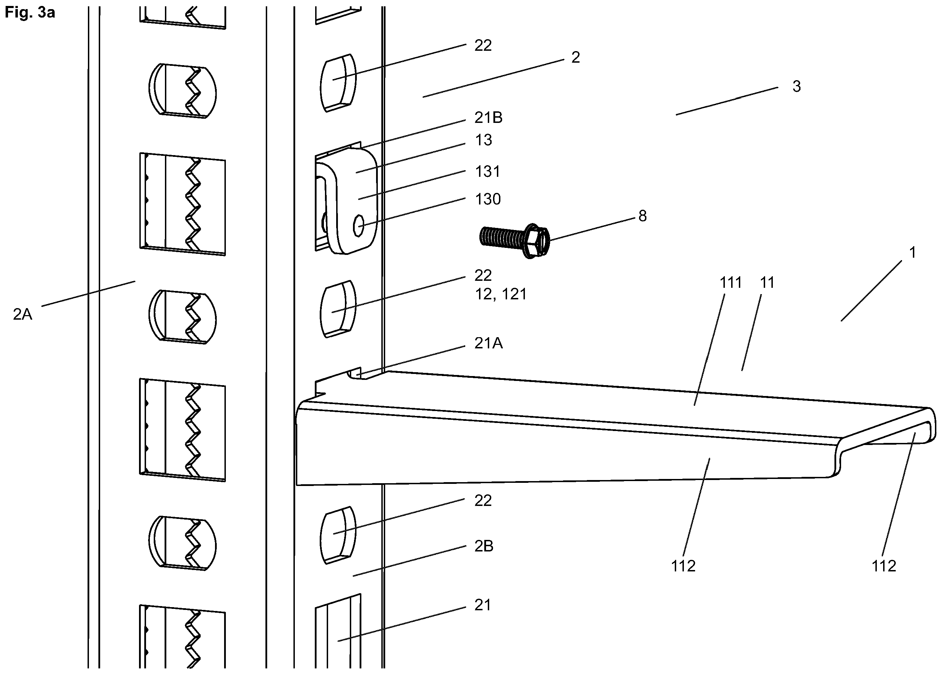

Fig. 3a zeigt die Montagevorrichtung 3 in der Position des Auslegers 1 von Fig. 2c mit einer Arretierschraube 8, die in die Durchtrittsöffnungen 120 (siehe Fig. 1a) und 130 im Verbindungsteil 121 und im Halteteil 13 eindrehbar ist.

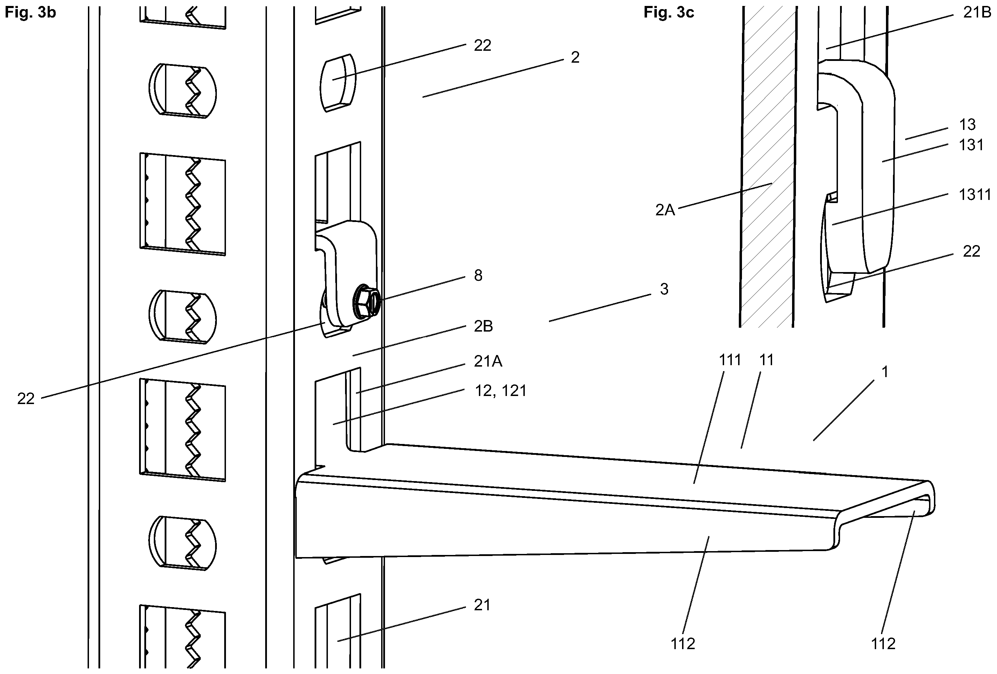

Fig. 3b zeigt die Montagevorrichtung 3 von Fig. 3a nach dem vertikalen Verschieben des Auslegers 1 und dem Einhängen des Halteteils 13 am Seitenteil 2B sowie der Arretierung des Auslegers 1 durch Eindrehen der Arretierschraube 8.

Fig. 3c zeigt das Halteteil 13 des Auslegers 1 mit einem Abschlussteil 131, welches ein Rastelement 1311 aufweist, das in die benachbarte Profilöffnung 22 einrasten kann. Das Abschlussteil 131 ist vorzugsweise zungenförmig und/oder elastisch ausgebildet, sodass es die zweite Profilöffnung 21B leicht übergreifen und mit dem Rastelement 1311 zurück in die benachbarte Profilöffnung 22 eintreten kann. Nach der Montage des Auslegers 1 ist dieser somit auch ohne Einsetzen einer Arretierschraube durch die Rastverbindung automatisch gesichert. Die Rastverbindung kann z.B. mittels eines Schraubendrehers durch Anheben des Abschlussteils 131 in einfacher Weise wieder aufgehoben werden.

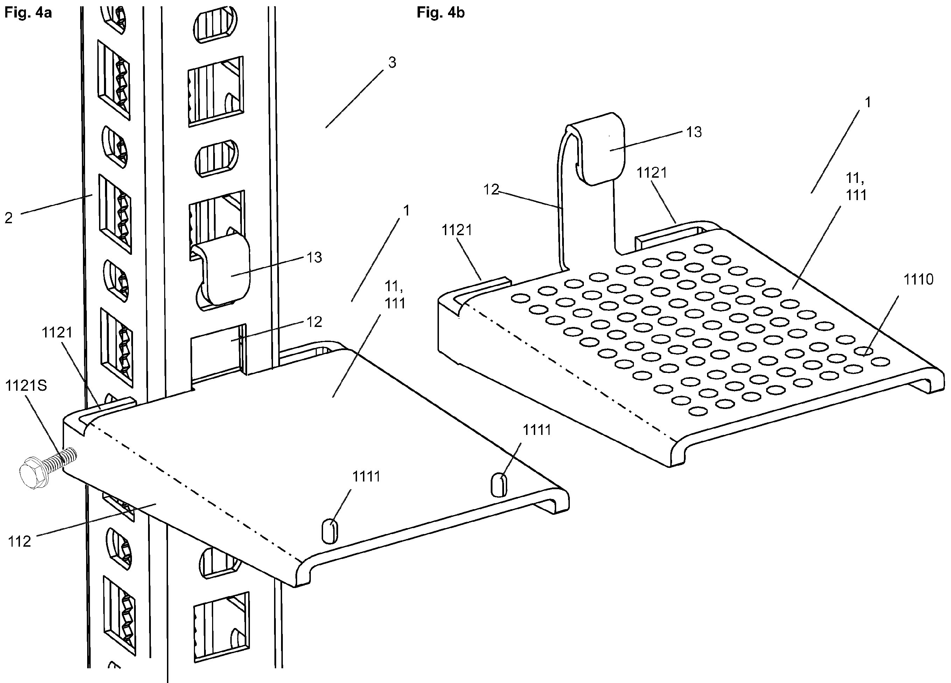

Fig. 4a zeigt die Montagevorrichtung 3 von Fig. 3a mit einem Tragprofil 2 und einem vorzugsweise ausgestalteten Ausleger 1, dessen Tragarm 11 eine breitere Auflageplatte 111 aufweist. Die Auflageplatte 111 ist breiter als die zugewandte Seite des Tragprofils 2, an der der Ausleger 1 eingehängt ist. Üblicherweise sind die Ausleger 1 schmaler als Tragprofil 2 oder weisen etwa dieselbe Breite auf. Vorzugsweise ausgestaltete Ausleger 1 weisen hingegen eine Auflageplatte 111 auf, die breiter als das Tragprofil 2 bzw. die zugewandte Seite des Tragprofils 2 ist. Die Breite der Auflageplatte 111 kann um einen Faktor in einem Bereich von vorzugsweise 1.5 -10 oder mehr grösser sein als die Breite des Tragprofils 2.die Breite wird dabei vorzugsweise entsprechenden Kabelführungsvorrichtungen und deren Montageart gewählt.

Die Auflageplatte 111 kann dabei symmetrisch oder asymmetrisch ausgestaltet sein. Weiterhin kann die Auflageplatte 111 rechteckförmig, dreieckförmig oder polygonal ausgestaltet sein.

Die Auflageplatte 111 kann zudem der Stabilisierung dienende Elemente, wie Sicken, Verformungen und dergleichen, aufweisen.

Die an die Auflageplatte 111 anschliessenden abgewinkelten Seitenplatten 112 weisen optional vorgesehene freiliegende winkelförmige Endstücke 1121 auf, die von beiden Seiten gegen das Tragprofil 2 gerichtet sind und dieses dazwischen einschliessen. Die Endstücke 1121 der Seitenplatten 112 können auch gerade nach hinten geführt und mit Gewindebohrungen versehen sein, in die Schrauben 1121S eingesetzt sind, die gegen das Tragprofil 2 geschraubt werden, um den Ausleger 1 gegenüber dem Tragprofil 2 zu fixieren. Weiterhin ist es möglich, kragenförmige Endstücke der Auflageplatte 111 des Tragarms 11 vorzusehen, welche das Tragprofil 2 teilweise umschliessen. Insbesondere, falls das Kopfstück 12 des Auslegers 1 in der zugeordneten Öffnung praktisch spielfrei gehalten ist, kann auf solche Stabilisierungsteile verzichtet werden.

Auf der Auflageplatte 111 sind in dieser vorzugsweisen Ausgestaltung Halteelemente 1111 vorgesehen, die es erlauben, eine aufgelegte Kabelführungsvorrichtung zu fixieren.

Fig. 4b zeigt den Ausleger 1 von Fig. 4a mit einer Auflageplatte 111, die Montageöffnungen 1110 aufweist, die es erlauben, eine aufgelegte Kabelführungsvorrichtung zu fixieren. Vorzugsweise weist die Auflageplatte 111 erfindungsgemässer Ausleger 1 Halteelemente 1111 gemäss Fig. 4a und/oder Montageöffnungen 1110 gemäss Fig. 4b auf.

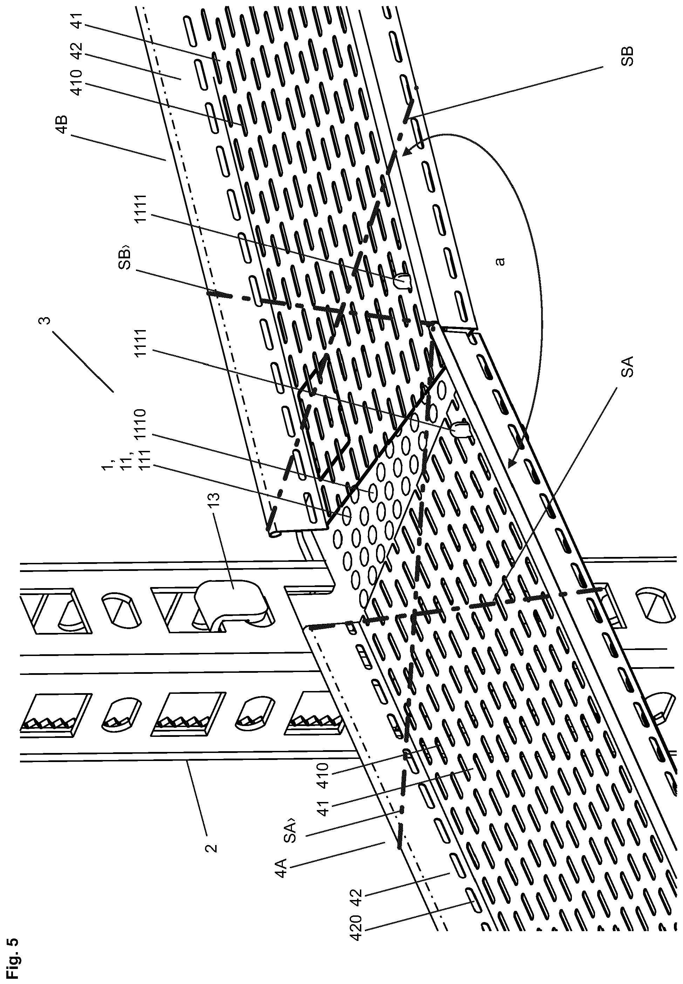

Fig. 5 zeigt eine Montagevorrichtung 3 mit dem Ausleger 1 von Fig. 4b und zwei darauf aufgelegten Kabelbahnen 4A und 4B, die in dieser vorzugsweisen Ausgestaltung je eine Bodenplatte 41 mit Längslochungen 410 und beidseits daran anschliessende Seitenwände 42 aufweisen. Anstelle der gezeigten Kabelbahnen können beliebige weitere Kabelführungsvorrichtungen, wie Kabelpritschen, Gitterbahnen, oder dergleichen aufgelegt werden.

Die Kabelführungsvorrichtungen 4A, 4B, die mit ihren Enden auf die Auflageplatte 111 aufgelegt sind, können in einem weiten Bereich in beide Richtungen gegeneinander gedreht werden. In der gezeigten Konfiguration schliessen die Kabelführungsvorrichtungen 4A, 4B auf der zugewandten Seite einen Winkel a ein, der kleiner als 180° ist. Die Kabelführungsvorrichtungen 4A, 4B können aber auch derart gedreht werden, dass sie auf der zugewandten Seite einen Winkel a einschliessen, der kleiner als 180° ist. Der Winkel a liegt typischerweise im Bereich von 90° - 270°, wobei der Winkel a typischerweise im Bereich von 135° - -225° liegt.

Es ist ersichtlich, dass die Kabelführungsvorrichtungen 4A, 4B bzw. Kabelbahnen wahlweise gegeneinander gedreht und in einer bestimmten Lage in einfacher Weise fixiert werden können. Dazu wird beispielsweise wenigstens ein Fixierelement oder Montageelement 1111, wie eine Schraube oder ein Stift, durch eine Öffnung 410 in der Bodenplatte 41 der Kabelbahn 4 und weiter durch eine korrespondierende Montageöffnung 1110 in der Auflageplatte 111 hindurch geführt. Das Montageelement 1111 kann mit der Auflageplatte 111 verbunden sein oder vom Installateur eingesetzt werden. Alternativ können auch Kabelbinder, durch die Montageöffnungen 1110 und die Längslochungen 410 hindurch geführt werden.

In der gezeigten Ausgestaltung ist zwischen den Enden der Kabelführungsvorrichtungen 4A, 4B ein dreieckiges Teil der Auflageplatte 111 freigehalten, welche praktisch nahtlos an die Bodenplatten 41 der Kabelführungsvorrichtungen 4A, 4B anschliesst. Die Enden können auch über die gesamte Breite der Kabelführungsvorrichtungen 4A, 4B aneinander anschliessen, wenn diese frontseitig durch Schrägschnitte SA, SB oder SA', SB' aneinander angepasst sind.

Der Ausleger 1 bildet daher ein Verbindungsstück, für die Verbindung von Kabelbahnen 4A, 4B. Dabei können die Ausleger 1 beliebig ausgestaltete Kopfstücke 12 aufweisen, die mit dem Montageprofil 2 in beliebiger Weise verbunden, **z.B.** eingehängt oder verschraubt, werden.

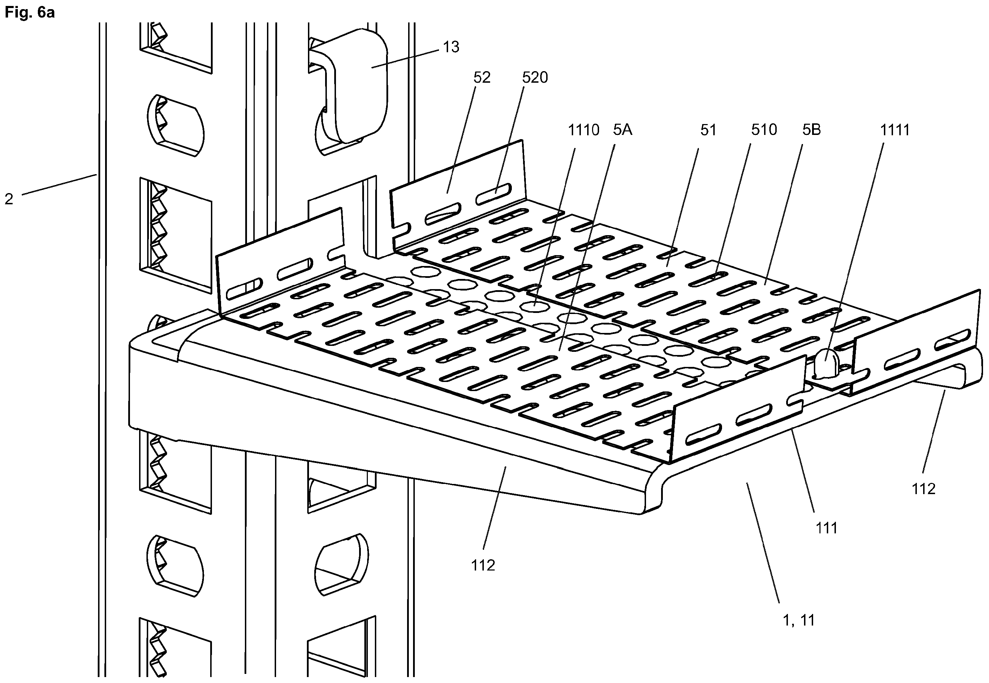

Fig. 6a zeigt die Montagevorrichtung 3 von Fig. 5 mit auslenkbaren Flügelprofilen 5A, 5B, die Bodenstücke 51 mit Längsöffnungen 510 und Seitenstücke 52 mit Längsöffnungen 520 aufweisen. Die Flügelprofile 5A, 5B sind von der Auflageplatte 111 bzw. daran vorgesehenen Halteelementen 1111 oder weiteren Montageelementen vorzugsweise drehbar und fixierbar gehalten. In der gezeigten Ausgestaltung sind die Flügelprofile 5A, 5B aus einer Kabelbahn 4 bzw. 4A und 4B ausgeschnittene Teile. Da die Kabelbahnen 4 bzw. 4A und 4B stapelbar sind, können diese ebenfalls spielfrei in die Flügelprofile 5A, 5B eingesetzt und in einfacher Weise fixiert werden. Beispielsweise werden Kabelbinder durch die Öffnungen 420, 520 in den Seitenwänden 42 der Kabelbahnen 4A und 4B und der Seitenstücke 52 der Flügelprofile 5A, 5B eingesetzt.

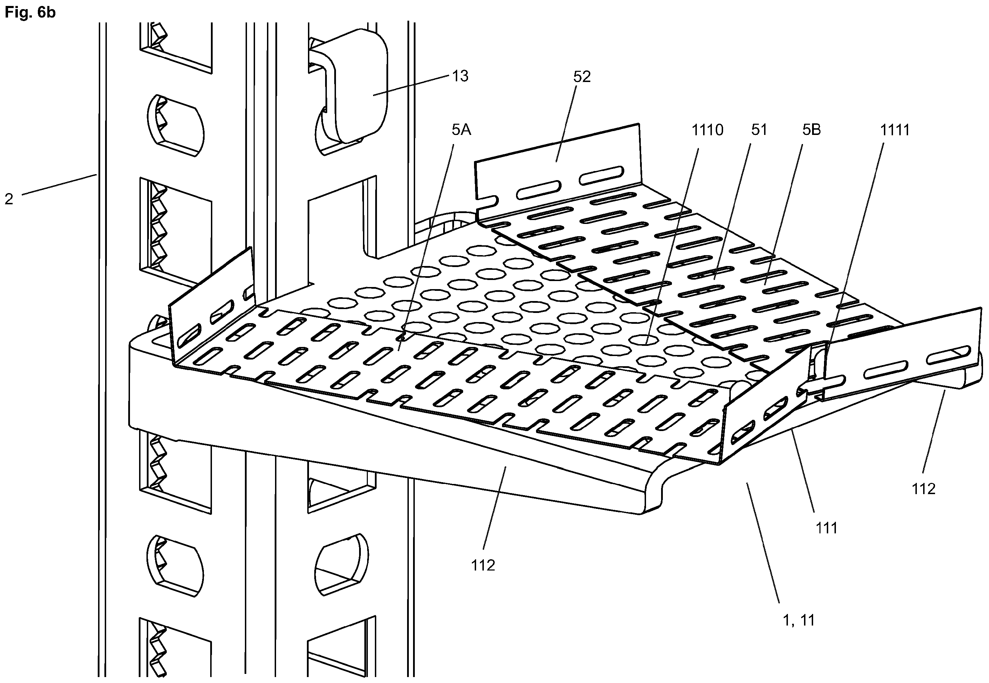

Fig. 6b zeigt die Montagevorrichtung 3 von Fig. 6a mit ausgelenkten Flügelprofilen 5A, 5B, die in der jeweiligen Position vorzugsweise, z.B. durch Schraubengarnituren oder Kabelbinder in einfacher Weise fixierbar sind.

Die Montagevorrichtung 3 kann ferner mehrere Montageprofile 2 mit je wenigstens einem Ausleger 1 aufweisen. Beispielsweise wird mit der erfindungsgemässen Montagevorrichtung 3 eine Kabelstrasse realisiert, die an den Punkten einer Wegänderung jeweils ein Montageprofil 2 mit einem Ausleger 1 gemäss Fig. 5 oder 6a aufweist. Wie erwähnt können die vorzugsweise ausgestalteten Ausleger 1, die ein Verbindungsstück oder ein Winkelstück bilden, in beliebiger Weise mit dem Montageprofil 2 verbunden werden.

### Literaturverzeichnis

[1] EP1155638A1
[2] EP1804354A2 EP2846428A1

## Patentansprüche

1. Montagevorrichtung (3) mit wenigstens einem Tragprofil (2), das wenigstens ein Seitenteil (2A, 2B, 2C) aufweist, das mit einer Reihe von vorzugsweise regelmässig voneinander beanstandeten Profilöffnungen (21, 22) versehen ist, und mit einem mit dem Tragprofil (2) verbundenen Ausleger (1), der ein Kopfstück (12), das mit einem der Seitenteile (2A, 2B, 2C) des Tragprofils (2) verbunden ist, und einen mit dem Kopfstück (12) verbundenen Tragarm (11) aufweist, welcher eine Auflageplatte (111) umfasst, an die an einer oder beiden Seiten eine abgewinkelte Seitenplatte (112) anschliesst, wobei das Kopfstück (12) ein langgestrecktes Verbindungsteil (121) aufweist, **dadurch gekennzeichnet, dass** an das Verbindungsteil (121) ein hakenförmiges Halteteil (13) anschliesst, wobei das langgestreckte Verbindungsteil (121) eingeführt durch eine erste Profilöffnung (21A) innerhalb des Tragprofils (2) bis zu einer zweiten Profilöffnung (21B) verläuft, an der das Halteteil (13) aus dem Tragprofil (2) heraus ragt und am Tragprofil (2) eingehängt ist und dass ein Endstück (1121) der wenigstens einen Seitenplatte (112) angrenzend an die erste Profilöffnung (21A) am zugehörigen Seitenteil (2A; 2B; 2C) des Tragprofils (2) anliegt.

2. Montagevorrichtung (3) nach Anspruch 1, **dadurch gekennzeichnet, dass** das Halteteil (13) dem Tragarm (11) zugewandt oder vom Tragarm (11) abgewandt ist und dass die erste Profilöffnung (21A) und die zweite Profilöffnung (21B) gegebenenfalls beabstandet von einer dazwischenliegenden dritten Profilöffnung (22) an demselben Seitenteil (2A; 2B; 2C) oder an unterschiedlichen Seitenteilen (2A, 2B, 2C) vorgesehen sind, wobei die erste Profilöffnung (21A) oberhalb oder unterhalb der zweiten Profilöffnung (21B) liegt.

3. Montagevorrichtung (3) nach Anspruch 1 oder 2, **dadurch gekennzeichnet, dass** das Verbindungsteil (121) und/oder das Halteteil (13) federelastisch ausgebildet sind oder dass das Halteteil (13) auf ein federelastisches Teil, wie einer Metallfeder oder ein elastischen Kunststoffelement abgestützt ist.

4. Montagevorrichtung (3) nach einem der Ansprüche 1 - 3, **dadurch gekennzeichnet, dass** der Tragarm (11) und das Kopfstück (12) des Auslegers (1) einstückig miteinander verbunden sind oder dass der Tragarm (11), das Kopfstück (12) und das Halteteil (13) des Auslegers (1) einstückig miteinander verbunden sind.

5. Montagevorrichtung (3) nach einem der Ansprüche 1 - 4 **dadurch gekennzeichnet, dass** das Halteteil (13) ein zumindest annähernd parallel zum Verbindungsteil (121) verlaufendes Abschlussteil (131) aufweist, welches mit dem freien Ende gegen den Tragarm (11) des Auslegers (1) gerichtet ist.

6. Montagevorrichtung (3) nach Anspruch 5, **dadurch gekennzeichnet, dass** das Abschlussteil (131) gebogen ist und/oder dass das Abschlussteil (131) federelastisch ausgebildet oder gehalten ist und vorzugsweise ein Rastelement aufweist, welches in eine der Profilöffnungen (21, 22) einrasten kann.

7. Montagevorrichtung (3) nach einem der Ansprüche 1 - 6, **dadurch gekennzeichnet, dass** das Endstück (1121) der wenigstens einen Seitenplatte (112) oder die Endstücke (1121) der beiden Seitenplatten (112) am zugehörigen Seitenteil (2A; 2B; 2C) des Tragprofils (2) in Einformungen (201) eingesenkt sind, die vorzugsweise als Führungselemente dienen.

8. Montagevorrichtung (3) nach einem der Ansprüche 1 - 7, **dadurch gekennzeichnet, dass** die Auflageplatte (111) des Tragarms (11) breiter als das Tragprofil (2) ausgebildet ist und dass auf der Auflageplatte (111) gegeneinander gerichtete Enden von zwei Kabelführungsvorrichtungen (4A, 4B), die parallel zueinander ausgerichtet sind oder die gegeneinander abgewinkelt sind, aufliegen.

9. Montagevorrichtung (3) nach einem der Ansprüche 1 - 8, **dadurch gekennzeichnet, dass** der Tragarm (11) oder die Auflageplatte (111) mit Halteteilen (1111) und/oder Montageteilen (1110) versehen sind, die zum kraftschlüssigen oder formschlüssigen Halten der aufgelegten Kabelführungsvorrichtungen (4A, 4B) vorgesehen sind.

## Claims

1. Mounting device (3) with at least one support profile (2), which comprises at least one side member (2A, 2B, 2C), which is provided with a row of preferably regularly spaced profile openings (21, 22) , and with a cantilever (1) connected to the support profile (2) , which has a head piece (12) connected to one of the side members (2A, 2B, 2C) of the support profile (2) and a support arm (11) connected to the head piece (12), which support arm (11) comprises a support plate (111) which is adjoined on one or both sides by an angled side plate (112) on one or both sides, wherein the head piece (12) comprises an elongated connecting member (121), **characterized in that** a hook-shaped holding member (13) is adjoining the connecting member (121), wherein the elongated connecting member (121) inserted through a first profile opening (21A) within the support profile (2) extends to a second profile opening (21B), at which the holding member (13) protrudes from the support profile (2) and is hooked onto the support profile (2), and that an end piece (1121) of the at least one side plate (112) abuts adjacent to the first profile opening (21A) on the associated side member (2A; 2B; 2C) of the support profile (2).

2. Mounting device (3) according to claim 1, **characterized in that** the holding member (13) faces the support arm (11) or is turned away from the support arm (11) and that the first profile opening (21A) and the second profile opening (21B) are, optionally spaced apart from a third profile opening (22) located between them, on the same side member (2A; 2B; 2C) or on different side members (2A, 2B, 2C), wherein the first profile opening (21A) is located above or below the second profile opening (21B).

3. Mounting device (3) according to claim 1 or 2, **characterized in that** the connecting member (121) and/or the holding member (13) are resiliently elastic or that the holding member (13) is supported on a resiliently elastic part, which is a metal spring or an elastic plastic element.

4. Mounting device (3) according to one of claims 1 - 3, **characterised in that** the support arm (11) and the head piece (12) of the cantilever (1) are connected to each other in one piece or that the support arm (11), the head piece (12) and the holding member (13) of the cantilever (1) are connected to each other in one piece.

5. Mounting device (3) according to one of claims 1 - 4, **characterised in that** the holding member (13) comprises an end piece (131) which extends at least approximately parallel to the connecting member (121) and is directed with its free end towards the support arm (11) of the cantilever (1).

6. Mounting device (3) according to claim 5, **characterised in that** the end piece (131) is bent and/or that the end piece (131) is spring-elastic or held in a spring-elastic manner and preferably comprises a locking element which can lock into one of the profile openings (21, 22).

7. Mounting device (3) according to one of claims 1 - 6, **characterised in that** the end piece (1121) of the at least one side plate (112) or the end pieces (1121) of the two side plates (112) are sunk at the corresponding side member (2A; 2B; 2C) of the support profile (2) into recesses (201) which preferably serve as guide elements.

8. Mounting device (3) according to one of claims 1 - 7, **characterised in that** the support plate (111) of the support arm (11) is wider than the support profile (2) and that ends of two cable guiding devices (4A, 4B) are positioned on the support plate (111) facing each other, which are aligned parallel to each other or at an angle to each other.

9. Mounting device (3) according to one of claims 1 - 8, **characterised in that** the support arm (11) or the support plate (111) are provided with retaining parts (1111) and/or mounting parts (1110) which are designed to hold the cable guiding devices placed on them in a force-fitting or form-fitting manner (4A, 4B).

## Revendications

1. Dispositif de montage (3) avec au moins un profil de support (2), qui comporte au moins une partie latérale (2A, 2B, 2C) pourvue d'une série d'ouvertures de profil (21, 22) de préférence régulièrement espacées les unes des autres, et un cantilever (1) relié au profil de support (2), qui comprend une pièce de tête (12), qui est reliée à l'une des parties latérales (2A, 2B, 2C) du profil de support (2), et un bras de support (11), qui est relié à la pièce de tête (12), et qui comprend une plaque de support (111) à laquelle se raccorde, sur un ou deux côtés, une plaque latérale (112) inclinée, ladite pièce de tête (12) comportant une pièce de liaison (121) allongée, **caractérisé en ce qu'**une pièce de retenue (13) en forme de crochet se raccorde à la pièce de liaison (121), où la pièce de liaison (121) allongée s'étendant à travers d'une première ouverture de profil (21A) à l'intérieur du profil de support (2) jusqu'à une deuxième ouverture de profil (21B) au niveau de laquelle la pièce de retenue (13) dépasse du profil de support (2) et est accrochée au profil de support (2), et **en ce qu'**un embout (1121) de la au moins une plaque latérale (112) adjacente à la première ouverture de profil (21A) about contre la partie latérale (2A; 2B; 2C) correspondante du profil de support (2).

2. Dispositif de montage (3) selon la revendication 1, **caractérisé en ce que** la pièce de retenue (13) est tournée vers le bras de support (11) ou détournée du bras de support (11) et que la première ouverture de profil (21A) et la deuxième ouverture de profil (21B) sont prévues, le cas échéant à distance d'une troisième ouverture de profil (22) située entre elles, sur la même partie latérale (2A; 2B; 2C) ou sur différentes parties latérales (2A, 2B, 2C), où la première ouverture de profil (21A) est située au-dessus ou au-dessous de la deuxième ouverture de profil (21B).

3. Dispositif de montage (3) selon la revendication 1 ou 2, **caractérisé en ce que** la pièce de liaison (121) et/ou la pièce de retenue (13) sont élastiques ou **en ce que** la pièce de retenue (13) est appuyée sur une pièce élastique, telle qu'un ressort métallique ou un élément en matière plastique élastique.

4. Dispositif de montage (3) selon une des revendications 1 - 3, **caractérisé en ce que** le bras de support (11) et la pièce de tête (12) du cantilever (1) sont reliés entre eux d'un seul tenant ou que le bras de support (11), la pièce de tête (12) et la pièce de retenue (13) du cantilever (1) sont reliés entre eux d'un seul tenant.

5. Dispositif de montage (3) selon une des revendications 1 - 4, **caractérisé en ce que** la pièce de retenue (13) comporte une pièce d'extrémité (131) s'étendant au moins approximativement parallèlement à la pièce de liaison (121) et laquelle pièce d'extrémité (131) est dirigée par son extrémité libre vers le bras de support (11) du cantilever (1).

6. Dispositif de montage (3) selon la revendication 5, **caractérisé en ce que** la pièce d'extrémité (131) est courbée et/ou **en ce que** la pièce d'extrémité (131) est élastique ou maintenue de manière élastique et comporte de préférence un élément d'encliquetage lequel peut s'encliqueter dans l'une des ouvertures du profil (21, 22).

7. Dispositif de montage (3) selon une des revendications 1 - 6, **caractérisé en ce que** l'embout (1121) de la au moins une plaque latérale (112) ou les embouts (1121) des deux plaques latérales (112) sont enfoncés, au niveau de la partie latérale correspondante (2A; 2B; 2C) du profil de support (2) dans des empreintes (201) qui servent de préférence d'éléments de guidage.

8. Dispositif de montage (3) selon une des revendications 1 - 7, **caractérisé en ce que** la plaque de support (111) du bras de support (11) est plus large que le profil de support (2) et **en ce que** les extrémités opposées de deux dispositifs de guidage de câbles (4A, 4B), qui sont parallèles entre eux ou qui sont coudés l'un par rapport à l'autre, reposent sur la plaque de support (111).

9. Dispositif de montage (3) selon une des revendications 1 - 8, **caractérisé en ce que** le bras de support (11) ou la plaque de support (111) est pourvu de pièces de retenue (1111) et/ou de pièces de montage (1110) qui sont prévues pour maintenir par adhérence ou par complémentarité de forme les dispositifs de guidage de câbles (4A, 4B) posés.
